# EUROPÄISCHE PATENTSCHRIFT

(11) **EP 3 939 828 B1**
(45) Veröffentlichungstag und Bekanntmachung des Hinweises auf die Patenterteilung: **25.10.2023**
(21) Anmeldenummer: 21185966.5
(22) Anmeldetag: 16.07.2021
(51) Int. Cl.: B60N 2/50, B60N 2/52, B60N 2/54

(54) **FAHRZEUGSITZ MIT EINER ADAPTIVEN DÄMPFUNG EINER DEM FAHRZEUGSITZ ZUGEORDNETEN SCHWINGEINHEIT UND VERFAHREN ZUR DÄMPFUNGSREGELUNG DER SCHWINGEINHEIT**
VEHICLE SEAT WITH ADAPTIVE DAMPING OF AN OSCILLATING UNIT ASSOCIATED WITH THE VEHICLE SEAT AND METHOD FOR CONTROLLING THE DAMPING OF THE OSCILLATING UNIT
SIÈGE DE VÉHICULE DOTÉ D'UN AMORTISSEMENT ADAPTATIF D'UNE UNITÉ OSCILLANTE AFFECTÉE AU SIÈGE DE VÉHICULE ET PROCÉDÉ DE RÉGLAGE DE L'AMORTISSEMENT DE L'UNITÉ OSCILLANTE

(30) Priorität: 16.07.2020 DE 102020208896
(43) Veröffentlichungstag der Anmeldung: 19.01.2022
(73) Patentinhaber: VOLKSWAGEN AG, 38440 Wolfsburg (DE)
(72) Erfinder: Baur, Elmar, 38489 Jübar (DE); Müller, Christian, 31860 Emmerthal (DE); Stops, Tobias, 39108 Magdeburg (DE)

(56) Entgegenhaltungen:
- US-A- 5 732 370
- US-A1- 2004 089 488
- US-A1- 2013 158 791

## Beschreibung

Die Erfindung betrifft einen Fahrzeugsitz mit einer, gegenüber einer Karosserie des Fahrzeugs einem Sitzteil des Fahrzeugsitzes angeordneten, Schwingeinheit. Die Schwingeinheit umfasst ein Federsystem und ein verstellbares Dämpfersystem, die in eine Bewegungskinematik des Fahrzeugsitzes integriert sind.

Gemäß Stand der Technik sind Fahrzeugsitze mit unterschiedlich ausgebildeten Schwingeinheiten mit integrierten Federsystemen und verstellbaren Dämpfersystemen bekannt.

Für Fahrzeugsitze von Lastkraftwagen ist bekannt, dass die Vorspannung der Federung, beispielsweise mittels Handrad, manuell auf das Gewicht einer aufsitzenden Person abgestimmt werden kann. Ebenso ist bekannt, dass mittels eines Hebels der Dämpfungsgrad des Öldruckdämpfers einer Sitzfederung manuell variiert werden kann.

So ist aus der Druckschrift DE 10 2016 216 653 A1 ein aktives Fahrzeugsitzsystem sowie ein Verfahren zum Betreiben eines aktiven Fahrzeugsitzsystems bekannt. Das offenbarte Fahrzeugsitzsystem umfasst wenigstens eine Erfassungseinheit zur Erfassung zumindest einer auf die Fahrzeugbewegung einwirkenden Störinformation, die sich auf den Fahrzeugsitz auswirkt. Es wird vorgeschlagen, dass eine Verarbeitungseinheit anhand der Störinformation mittels eines aktiven Elementes eine Kompensation realisiert, die zumindest teilweise die Störungsauswirkung auf den Fahrzeugsitz kompensiert.

Als aktives Element ist insbesondere ein Linearmotor dazu ausgeführt, aktiv eine Kompensation, insbesondere durch eine Kraftausübung, für den Fahrzeugsitz vorzunehmen/durchzuführen.

Als Erfassungseinheit ist eine Sensorik am Fahrwerk des Fahrzeuges, insbesondere im Bereich einer Vorderachse und/oder wenigstens eines Vorderrads, vorgesehen.

Aus der Druckschrift EP 1 577 156 A2 ist ein Fahrzeugsitz mit einer durch eine Regelvorrichtung regelbaren Stützvorrichtung des Fahrzeugsitzes bekannt, wobei die Stützvorrichtung in zumindest einem Freiheitsgrad beweglich gelagert ist. Die Regelvorrichtung berücksichtigt Daten von einem fahrzeugfest angeordneten Sensor zur Ermittlung der Fahrzeugbeschleunigung, einen sitzstrukturfest angeordneten Sensor zur Erfassung der Beschleunigung der Sitzstruktur sowie einen Sensor zur Erfassung der Relativbewegung der Sitzstruktur bezüglich des Fahrzeugs. Die Regelvorrichtung berechnet aus den Messgrößen eine Stellgröße für einen Aktor, wie beispielsweise einen Linearmotor, zum Regeln des Übertragungsverhaltens der Stützvorrichtung in dem vorgegebenen Freiheitsgrad. Es ist beispielsweise vorgesehen, dass die Regelvorrichtung das Steuern der Federkennlinie der Stützfeder oder das Steuern der Dämpferkennlinie des Stützdämpfers realisiert.

Die Druckschrift WO 2004/052678 A1 offenbart einen Fahrzeugsitz mit aktiver Sitzfederung. Diese umfasst einen federnd gelagerten Schwingrahmen und eine mittels mindestens zwei Aktoren verstellbare Sitzmechanik, die an den Schwingrahmen angelenkt ist. Es sind mindestens zwei Beschleunigungssensoren vorgesehen, von denen der erste Beschleunigungssensor an einem Federabstützpunkt in der Nähe einer ersten Gelenkachse und der zweite Beschleunigungssensor an einem Federabstützpunkt in der Nähe einer zweiten Gelenkachse angeordnet ist. Weiterhin werden mindestens zwei Stellglieder durch eine Leistungs- und Steuerungselektronik, mit der die Signale der Beschleunigungssensoren verarbeitet werden, angesteuert. Die Leistungs- und Steuerungselektronik steuert die Stellglieder zur Betätigung der Aktoren an, um die Sollstellkräfte zu realisieren. Somit ist der Schwingrahmen mittels der beiden Aktoren in zwei Bewegungsfreiheitsgraden verstellbar, so dass dynamische Kräfte, die vom Fahrzeugchassis in den Sitz eingeleitet werden, in zwei Bewegungsfreiheitsgraden kompensiert werden können.

Eine weitere Fahrzeugsitzfederung ist aus der Druckschrift EP 2 810 819 B1 bekannt. Diese umfasst eine Horizontalfederungseinrichtung mit einem karosserieseitigen Unterteil und einem hierzu relativ verlagerbaren sitzteileseitigen Oberteil. Zwischen dem sitzteileseitigen Oberteil und dem karosserieseitigen Unterteil ist eine Koppeleinrichtung wechselwirkend angeordnet, wobei die Koppeleinrichtung als ein erstes Koppelelement ein deformierbares Federungselement und als ein weiteres Koppelelement eine Lager- und Deformationseinrichtung umfasst. Dabei ist das deformierbare Federungselement zwischen zwei aufeinander zugerichteten Anlageflächen eines Aufnahmeraumes der Lager- und Deformationseinrichtung angeordnet, wobei die Koppelelemente jeweils mit dem sitzteileseitigen Oberteil oder mit dem karosserieseitigen Unterteil gekoppelt sind.

Aus den Druckschriften US 5 732 370 A1, US 2013/0158791 A1 und US 2004/089488 A1 sind Fahrzeugsitze mit einer zwischen einer Karosserie und einem Sitzteil des Fahrzeugsitzes angeordneten Schwingeinheit, umfassend ein Federsystem und ein verstellbares Dämpfersystem bekannt, die in eine Bewegungskinematik integriert sind, wobei das verstellbare Dämpfersystem als adaptives Dämpfersystem ausgebildet ist, das neben dem Federsystem in die Bewegungskinematik der Schwingeinheit integriert ist, und wobei das adaptive Dämpfersystem zudem einen Bewegungssensor und eine Steuereinheit umfasst, der eine vertikale Bewegung des auf der Bewegungskinematik angeordneten Sitzteiles erfasst, um in Abhängigkeit eines erfassten Sensorsignals des Bewegungssensors eine Dämpfung der Schwingeinheit und damit des Sitzteiles durch adaptive Ansteuerung des Dämpfersystems zu dämpfen.

Der Erfindung liegt, ausgehend vom Stand der Technik, nun die Aufgabe zugrunde, einen Fahrzeugsitz mit einer verbesserten Schwingeinheit bereitzustellen. Mittels der aus Federsystem und Dämpfungssystem bestehenden Schwingeinheit soll der Fahrkomfort für die auf dem Sitzteil aufsitzende Person verbessert werden. Insbesondere soll ein Nachschwingen des Sitzteiles des Fahrzeugsitzes infolge von durch Fahrbahnunebenheiten hervorgerufenen Anregungen verringert/vermieden werden. Die Schwingeinheit soll einfach aufgebaut sein und einen geringen Platzbedarf aufweisen.

Die Erfindung betrifft einen Fahrzeugsitz mit den Merkmalen des Anspruchs 1.

Durch die adaptive Ansteuerung des Dämpfersystems erfolgt in Abhängigkeit vom permanent erfassten Sensorsignalen mindestens eines Bewegungssensors in vorteilhafter Weise eine Dämpfung der Schwingeinheit des Fahrzeugsitzes.

Die aufgrund von Fahrbahnunebenheiten auf das Sitzteil des Fahrzeugsitzes wirkenden Anregungen führen zu Vertikalbewegungen des Sitzteiles. Diese Vertikalbewegungen werden auf vorteilhafte Weise mittels des Bewegungssensors unmittelbar erfasst. Durch Auswertung der Sensordaten kann die Steuereinheit das Dämpfersystem so ansteuern, dass eine der Anregung entgegenwirkende Dämpfung ansteht. Durch das erfindungsgemäße Dämpfersystem ist es somit möglich, die adaptive Dämpfung des Sitzteiles des Fahrzeugsitzes situativ an das jeweilige, anregungsinduzierte Schwingungsverhalten des Sitzteiles anzupassen. Dementsprechend wird durch die vorteilhaft gute Anpassung des Dämpfersystems an das Schwingungsverhalten des Sitzteiles vorteilhaft der Fahrkomfort erhöht.

Dadurch, dass nur ein Sensor vorgesehen ist, kann der Rechenaufwand der Steuereinheit vorteilhaft gering ausfallen. Der eine Sensor kann einfach und kostengünstig am Fahrzeugsitz installiert werden. Damit fallen die Mehrkosten für einen, mit dem adaptiven Dämpfersystem ausgerüsteten, Fahrzeugsitz gering aus.

In vorteilhafter Weise ist vorgesehen, dass ein in die Bewegungskinematik integriertes Federsystem, mindestens ein Federelement, eine Federsystem-Verstelleinheit zur Einstellung einer Vorspannung des mindestens einen Federelements, einen Höhensensor zur Erfassung der Höhe des Sitzteiles gegenüber einer festen Bezugshöhe, insbesondere einer Karosserie, und eine zugehörige Steuereinheit umfasst.

Dabei wird die Höhe des Sitzteiles gegenüber der festen Bezugshöhe, insbesondere der Karosserie nach dem Aufsitzen der jeweiligen Person in Ruheposition, also nach dem Einschwingen des Sitzteiles während des Fahrzeugstillstandes, erfasst. In der Regel wird die Höhe des Sitzteiles gegenüber der festen Bezugshöhe unmittelbar nach einem Initiierungsvorgang, insbesondere einem Einschalten der Zündung ermittelt.

Die Veränderung der Vorspannkraft des mindestens einen Federelementes (Federhärte/Federkennlinie des mindestens einen Federelementes bleibt unverändert) erfolgt erfindungsgemäß in Abhängigkeit der von dem Höhensensor erfassten Sensorsignale durch automatische Ansteuerung der auf das jeweilige Federelement einwirkenden Federsystemverstelleinheit.

Dadurch, dass der Höhensensor die Höhe des Sitzteiles gegenüber der festen Bezugshöhe erfasst, wobei diese Höhe gegenüber der festen Bezugshöhe vom Gewicht der aufsitzenden Person abhängt, ist es möglich, eine individuelle Härteeinstellung des (mindestens einen) Federelements in vorteilhafter Weise durch Veränderung der Vorspannung des Federelementes an die aufsitzende Person vorzunehmen, so dass eine Veränderung der Vorspannung des Federelementes in vorteilhafter Weise eine automatische Anpassung (ohne manuellen Eingriff durch die Person) an die jeweilige Person ermöglicht wird.

Das Einstellen der Höhe der Schwingeinheit erfolgte bisher, wie in der nachfolgenden Beschreibung anhand der Figuren noch detailliert erläutert ist, in konventioneller Weise per Handrad. Der Vorteil der erfindungsgemäßen Lösung besteht insbesondere darin, dass der Nutzer sein Gewicht nicht kennt und die Tätigkeit des manuellen Einstellens der Höhe der Schwingeinheit nicht ausführen muss, da die Einstellung einer optimalen Sitzhöhe beziehungsweise einer Wunschsitzhöhe automatisch ausgeführt wird.

Die Einstellung führt zu einer optimalen Mittenposition der Schwingeinheit in einem gewünschten vorgebbaren Arbeitsbereich, so dass ein Anschlagen an den Endlagen (oben und unten in vertikaler z-Richtung gesehen) vermieden wird, so dass der Komfort der Schwingeinheit in einem großen Arbeitsbereich optimal genutzt werden kann.

In vorteilhafter Weise wird ferner ein Nachschwingen des Sitzteiles, beispielsweise hervorgerufen durch Fahrbahnunebenheiten, durch ein Dämpfungselement eines Dämpfersystems, welches bevorzugt in die Bewegungskinematik integriert ist, reduziert beziehungsweise unterbunden. Das Nachschwingen des Sitzteiles kann somit durch das Dämpfersystem effizient und wirkungsvoll reduziert oder unterbunden werden, wie nachfolgend ebenfalls noch weiter erläutert wird.

Bei der herkömmlichen Lösung erfolgt das Einstellen der optimalen Höhe der Schwingeinheit in konventioneller Weise per Handrad. Bei der erfindungsgemäßen Lösung besteht ein Vorteil darin, dass der Nutzer sein Gewicht nicht kennen muss und keine Betätigungshandlung ausführen muss, da die Einstellung automatisch ausgeführt wird. Die Einstellung führt zu einer optimalen Mittenposition der Schwingeinheit in einem Arbeitsbereich, so dass ein Anschlagen an oberen und unteren Endlagen vermieden wird, so dass der Komfort der Schwingeinheit optimal genutzt werden kann.

Die Schwingeinheit umfasst ein integriertes adaptive Dämpfersystem, das mindestens ein Dämpferelement und eine Dämpferverstelleinheit umfasst.

Erfindungsgemäß ist die Dämpferverstelleinheit dazu ausgebildet, durch adaptive Ansteuerung der Dämpferverstelleinheit aufgrund eines Signals der Steuereinheit den Dämpfungsgrad/Dämpferhärte des Dämpferelements zu variieren.

Somit kann die aus mindestens einem Dämpferelement und einer auf das Dämpferelement zur Änderung des Dämpfungsgrades einwirkenden Dämpferverstelleinheit das Nachschwingen des Sitzteiles auf vorteilhafte Weise effizient verringert werden. Dementsprechend kann mit wenigen bekannten Baugruppen, die einen geringen Platzbedarf aufweisen, anhand mittels des mindestens einen Bewegungssensors erfassten Schwingverhaltens des Sitzteiles der Komfort für die aufsitzende Person erheblich verbessert werden.

In vorteilhafter Ausgestaltung der Erfindung sind die Dämpferverstelleinheit und/oder die Federsystemverstelleinheit als elektromechanisches Stellelement ausgebildet. Elektromechanische Stellelemente sind für den vorgesehenen Einsatz vorzugsweise Elektromotoren, wie insbesondere Linearmotoren, Getriebemotoren und Schrittmotoren. Diese Motoren können auf einfache Weise mit dem jeweiligen verstellbaren Dämpferelement beziehungsweise mit dem verstellbaren Federelement verbunden werden, um die Einstellung des Dämpfungsgrades des Dämpferelementes beziehungsweise der Vorspannung des Federelementes, wie durch die Signale der Steuereinheit vorgegeben, präzise und gegebenenfalls auch schnell vorzunehmen. Elektromotoren der angegebenen Bauformen sind als Massenprodukte kostengünstig verfügbar und können einfach mit der ohnehin in Fahrzeugen verfügbaren Elektroenergie versorgt werden.

Einer weiteren vorteilhaften Ausgestaltung der Erfindung entsprechend ist das Dämpferelement ein Öldruckdämpfer, ein pneumatischer Dämpfer oder ein als hydraulischer Öldruckdämpfer ausgebildetes Dämpferelement, das ist in besonderer Weise geeignet, das Dämpfungsverhalten der Schwingeinheit bedarfsgerecht anzupassen.

Öldruckdämpfer kommen bereits als handverstellbare Ausführungen an Fahrzeugsitzen zur Dämpfung des Schwingverhaltens zum Einsatz.

Dadurch, dass das Dämpferelement mit einem elektromechanischen Stellelement gekoppelt ist, kann durch die Veränderung des Durchlassquerschnittes des Öldruckdämpfers der Dämpfungsgrad entsprechend der abzudämpfenden Bewegungsenergie des Sitzteiles aufgrund der Berücksichtigung des durch Fahrbahnunebenheiten angeregten Schwingverhaltens situativ modifiziert werden.

Einer weiteren vorteilhaften Ausgestaltung der Erfindung entsprechend, ist der die Bewegung des Sitzteiles, mithin des Fahrzeugsitzes, erfassende Bewegungssensor ein Beschleunigungssensor.

Um die kinetische Energie des Fahrzeugsitzes zu dämpfen, muss diese aus dem Gewicht des Fahrzeugsitzes (Fahrzeugsitzmasse) einschließlich des Gewichtes der aufsitzenden Person (Körpermasse der Person) und der Beschleunigung der Massen in vertikaler Richtung ermittelt werden.

Wird der Beschleunigungssensor verwendet, kann in einer Steuereinheit aus der ermittelten Beschleunigung und der Summe aller Massen eine Geschwindigkeit berechnen werden, die als Grundlage für die Regelstrategie dient, wie noch weiter erläutert wird.

Entsprechend einer weiteren vorteilhaften Ausgestaltung der Erfindung ist der die Bewegung des Sitzteiles erfassende Bewegungssensor zugleich dazu ausgebildet, auch die Höhe des Sitzteiles gegenüber der festen Bezugshöhe zu erfassen. Die Vertikalbewegung des Sitzes basiert auf der Änderung der Höhe des Sitzteiles gegenüber der festen Bezugshöhe. Somit kann aus den Sensordaten bei geeigneter Ausbildung des Sensors auch die zur Einstellung der Vorspannung des Federelementes relevante Federvorspannkraft ermittelt werden.

Da das Gewicht des Sitzteiles und der aufsitzenden Person in einem Verhältnis zur Höhenposition des Sitzteiles steht, kann aus den Sensordaten zugleich auch das Gesamtgewicht des Sitzteiles, das für die Ansteuerung der Dämpferverstelleinheit relevant ist, ermittelt werden.

Damit kann mittels nur eines Bewegungssensors und einer Steuereinheit vorteilhaft mit geringem Aufwand eine effektive Verbesserung des Fahrkomforts durch eine Anpassung des Federelementes und des Dämpferelementes für den erfindungsgemäß ausgebildeten Fahrzeugsitz realisiert werden.

Weiterhin wird die Erfindungsaufgabe durch die Bereitstellung eines erfindungsgemäßen Verfahrens zur Regelung des Schwingverhaltens eines Fahrzeugsitzes mit den Merkmalen des Anspruchs 8 gelöst.

Bei dem Verfahren ist es vorgesehen, zur Regelung des Schwingverhaltens des Fahrzeugsitzes mittels des Bewegungssensors die Beschleunigung des Sitzteiles in vertikaler Richtung permanent zu erfassen und an die Steuereinheit weiterzuleiten.

Dabei kann das Gewicht der aufsitzenden Person geschätzt oder gemessen werden. Weiterhin wird die berechnete kinetische Energie mit einer geeigneten Zeitkonstante im Sekundenbereich tiefpassgefiltert.

Das Ergebnis der Filterung wird durch eine applizierte Hill-Funktion auf die Werte zwischen 0 und 1 normiert.

Der Wert 0 korrespondiert mit der weichsten Dämpfung und der Wert 1 korrespondiert mit der härtesten Dämpfung.

Sowohl die Werte und somit auch die Dämpfung können Werte zwischen 0 und 1 annehmen. Zur näheren Erläuterung wird auf die Beschreibung verwiesen.

Unter Verwendung der Hill-Funktion steuert die Steuereinheit entsprechend der zu dämpfenden kinetischen Energie die Dämpferverstelleinheit an und bewirkt somit die Kompensation der aufgrund der Fahrbahnunebenheiten angeregten kinetischen Energie. Dementsprechend wird vorteilhaft der Fahrkomfort für den erfindungsgemäßen Fahrzeugsitz erhöht.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: einen Fahrzeugsitz gemäß Stand der Technik in einer perspektivischen Darstellung mit einer gegenüber einer Karosserie und dem Sitzteil des Fahrzeugsitzes angeordneten Schwingeinheit, umfassend ein Federsystem und ein Dämpfersystem,
- Figur 2: eine Draufsicht der Schwingeinheit eines Fahrzeugsitzes mit zwei Federelementen gemäß Stand der Technik,
- Figur 3: einen Fahrzeugsitz gemäß Stand der Technik in einer schematischen Darstellung mit einer gegenüber einer Karosserie und dem Sitzteil des Fahrzeugsitzes angeordneten Schwingeinheit, umfassend ein Federsystem und ein Dämpfersystem,
- Figur 4: einen erfindungsgemäßen Fahrzeugsitz in einer perspektivischen Darstellung mit einer, gegenüber einer Karosserie und dem Sitzteil des Fahrzeugsitzes angeordneten, Schwingeinheit, umfassend ein automatisches Federsystem und ein adaptives Dämpfersystem,
- Figur 5: einen erfindungsgemäßen Fahrzeugsitz in einer schematischen Darstellung mit einer, gegenüber einer Karosserie und dem Sitzteil des Fahrzeugsitzes angeordneten, Schwingeinheit, umfassend ein automatisches Federsystem und ein adaptives Dämpfersystem,
- Figur 6: ein Verfahrensschema zur Regelung des Schwingverhaltens eines erfindungsgemäßen Fahrzeugsitzes und
- Figur 7: eine perspektivische Darstellung des Fahrzeugsitzes in Verbindung mit einem Energie-Zeit-Diagramm und einem Dämpferhärte-Energie-Diagramm.

Mögliche bevorzugte Ausführungen der Erfindung werden nachfolgend unter Darstellung des ermittelten Standes der Technik erläutert. Für die Zwecke der Beschreibung soll die in Längsrichtung eines Fahrzeuges, in dem ein erfindungsgemäßer Fahrzeugsitz 1 angeordnet ist, liegende Richtung mit "x" bezeichnet werden. Mit "y" wird die Richtung in der Horizontalen des Fahrzeuges orthogonal zur x-Richtung bezeichnet und mit "z" wird die Richtung in der Vertikalen des Fahrzeuges orthogonal zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

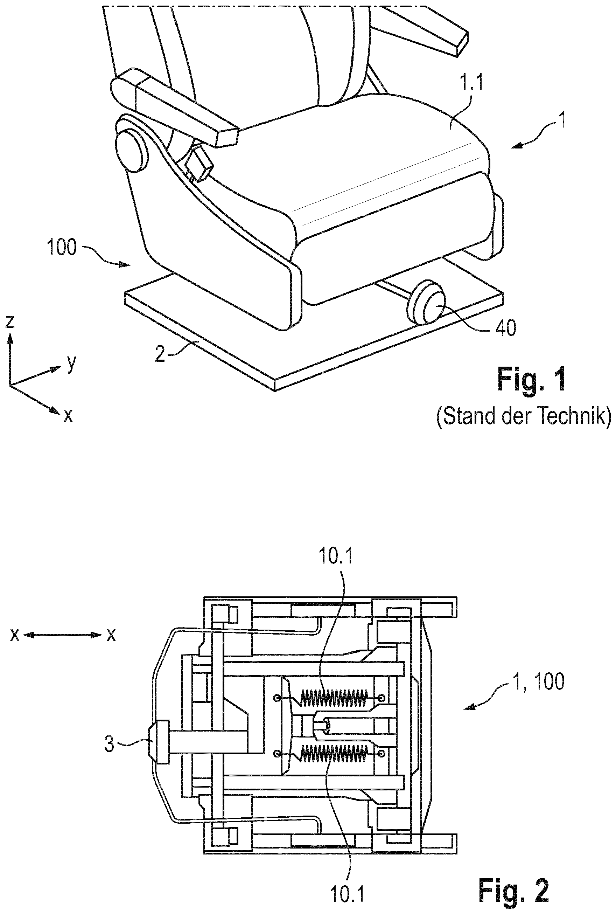

Die Figur 1 zeigt einen herkömmlichen Fahrzeugsitz 1 in einer perspektivischen Darstellung mit einer gegenüber einer Karosserie 2 und dem Sitzteil 1.1 des Fahrzeugsitzes 1 angeordneten Schwingeinheit 100.

In Figur 2 ist diese Schwingeinheit 100 in einer Draufsicht in einer Ebene unterhalb des Sitzteiles 1.1 dargestellt.

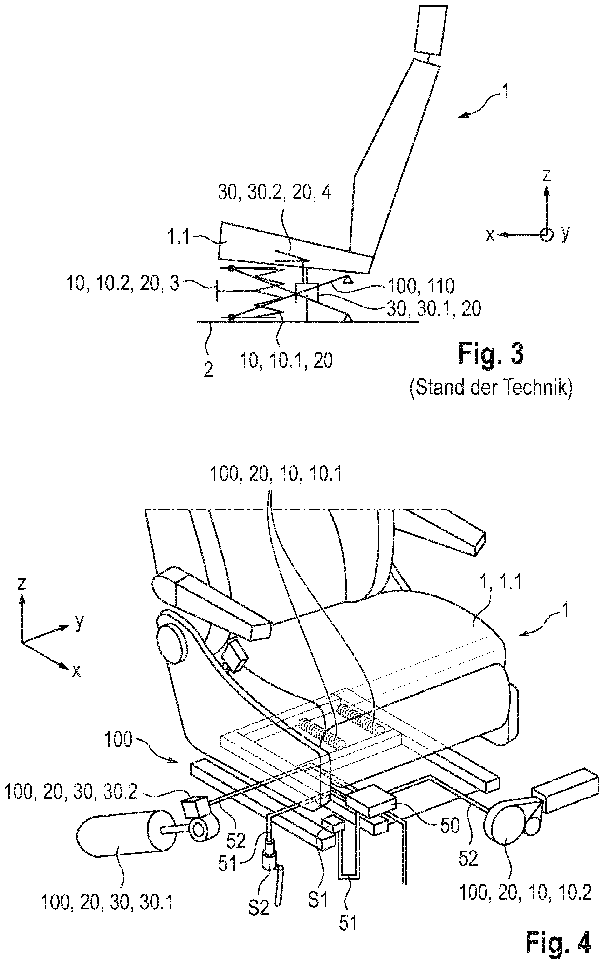

Die Figur 3 zeigt den aus Figur 1 und Figur 2 bekannten Fahrzeugsitz 1 in einer schematischen Darstellung.

Eine Führung des Sitzteiles 1.1 erfolgt durch eine bekannte Scherenkinematik oder Parallelführung 110 als Teil der Schwingeinheit 100.

Die beispielhaft dargestellte Scherenkinematik 110 ist zwischen Karosserie 2 und Sitzteil 1.1 angeordnet.

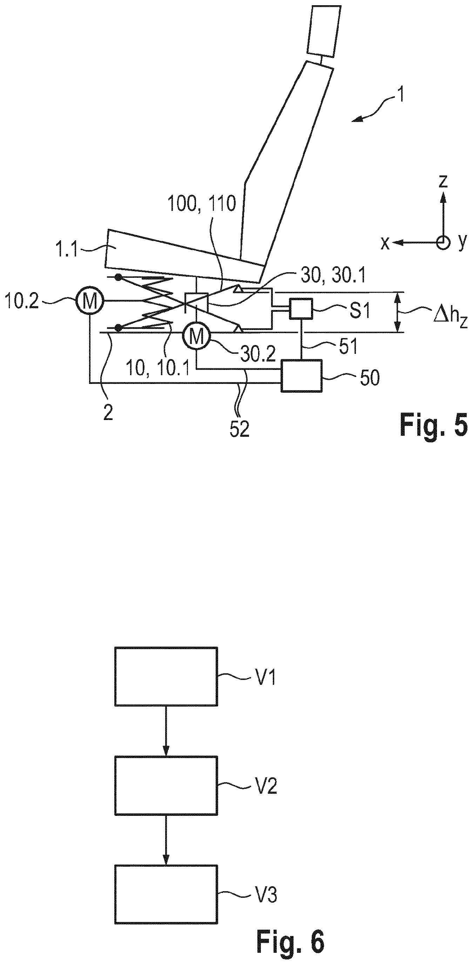

Im gewählten Ausführungsbeispiel weist die Scherenkinematik 110 in x-Richtung gesehen (hinten) gelenkige Festlager auf. Ein Festlager ist sitzteilfest und das andere Festlager ist karosseriefest angeordnet. In x-Richtung gesehen (vorne) sind gelenkige Gleitlager ausgebildet. Ein Gleitlager ist sitzteilfest und das andere Festlager ist karosseriefest angeordnet. Die Gleitführungen sind in den Figuren 3 und 5 angedeutet. Es versteht sich, dass die Kinematik insgesamt eine andere Ausgestaltung haben kann und im gewählten Ausführungsbeispiel insbesondere auch umgekehrt ausgeführt kann, das heißt, die Festlager sind vorne und die Gleitlager sind hinten angeordnet. Die Gleitlager gleiten beispielsweise über Rollen in Gleitführungen, die beispielsweise C-Profile sein können, in denen die Rollen in den Gleitführungen in x-Richtung gesehen nach vorn und hinten laufen. Insofern sind die vorderen Gleitführungen im gewählten Ausführungsbeispiel oben, in z-Richtung gesehen, sitzteilfest, und unten, in z-Richtung gesehen, karosseriefest angeordnet. Mittels dieser Kinematik erfolgt das Ein- und Ausfedern des Sitzteiles 1.1 gegenüber der Karosserie 2 mittels eines Federsystems 10 wie nachfolgend erläutert wird.

Zwischen dem Sitzteil 1.1 und der Karosserie 2 ist weiterhin ein Federsystem 10 vorgesehen, welches im gewählten Ausführungsbeispiel zwei Federelemente 10.1 (vergleiche Figur 2) und eine Federsystemverstelleinheit 10.2 zur manuellen Einstellung einer Federvorspannung umfasst.

Es versteht sich, dass erfindungsgemäß mindestens nur ein Federelement 10.1 angeordnet sein muss. Aus Figur 2 geht hervor, dass die Federelemente 10.1 in der Einbausituation horizontal in der x/y-Ebene liegend angeordnet sind. Sie sind über eine entsprechende Umlenkmechanik, die hier nicht weiter ausgeführt ist, in der Schwingeinheit 100 angeordnet, so dass eine aus z-Richtung wirkende Kraft, mithin eine sich auf das Sitzteil 1.1 setzenden Person, eine Verlagerung der Scheren der Scherenkinematik in z-Richtung bewirkt, während die Federelemente 10.1 der Federsystemverstelleinheit 10.2 in x-Richtung ge- oder entspannt werden.

Die Federelemente 10.1 sind in den schematischen Darstellungen der Figuren 3 und 5 zur Verdeutlichung der Erfindung vertikal dargestellt, um in den Figuren ihre Sichtbarkeit zu gewährleisten. Sie sind, wie erläutert, in der realen Einbausituation des Ausführungsbeispieles horizontal angeordnet.

Um die Federelemente 10.1 an das Gewicht der auf dem Sitzteil 1.1 aufsitzenden Person anpassen zu können, ist die Federsystemverstelleinheit 10.2 in herkömmlicher Weise als Handrad 3 zur individuellen Verstellung der Vorspannung der Federelemente 10.1 ausgebildet.

Durch Verstellung des Handrades 3 kann die Vorspannkraft der Federelemente 10.1 an die individuellen Parameter beziehungsweise Bedürfnisse der aufsitzenden Person angepasst werden.

Weiterhin ist in die Schwingeinheit 100 ein Dämpfersystem 30 integriert, um das Nachfedern der Federung zu verringern. Das Dämpfersystem 30 ist wie das Federsystem 10 zwischen der Karosserie 2 und dem Sitzteil 1.1 angeordnet.

Das herkömmliche statische Dämpfersystem 30 umfasst mindestens ein, hinsichtlich des Dämpfungsgrades manuell einstellbares, Dämpferelement 30.1, wie beispielsweise einen Öldruckdämpfer und eine, mittels Handhebel 4, betätigbare Dämpferverstelleinheit 30.2.

Somit kann, am seitlich neben dem Sitzteil 1.1 angeordneten Handhebel 4, die Dämpfungshärte des herkömmlichen Dämpfersystems 30 entsprechend der Nutzerbedürfnisse variiert werden.

Die Figuren 4 und 5 zeigen einen erfindungsgemäßen Fahrzeugsitz 1 mit einer, gegenüber einer Karosserie 2 und einem Sitzteil 1.1 des Fahrzeugsitzes 1, angeordneten Schwingeinheit 100.

Dabei ist in Figur 4 eine, aus Figur 1 hervorgehende, perspektivische Darstellung des erfindungsgemäßen Fahrzeugsitzes 1 abgebildet. Dabei sind die aktiven Elemente teilweise aus ihrer tatsächlichen Position im beziehungsweise am Fahrzeugsitz herausgezogen abgebildet.

Die Figur 5 zeigt eine auf Figur 3 basierende schematische Darstellung des erfindungsgemäßen Fahrzeugsitzes 1.

Der erfindungsgemäße Fahrzeugsitz 1 ist, wie der in den Figuren 1 bis 3 exemplarisch dargestellte Fahrzeugsitz 1 gemäß Stand der Technik, mit einer Schwingeinheit 100 ausgeführt. Die Schwingeinheit 100 des erfindungsgemäßen Fahrzeugsitzes 1 umfasst eine Scherenkinematik 110, ein automatisches Federsystem 10 und ein als adaptives Dämpfersystem ausgebildetes verstellbares Dämpfersystem 30.

Nachfolgend werden insbesondere die Unterschiede zum in den Figuren 1 bis 3 dargelegten Stand der Technik erläutert.

Die Schwingeinheit 100 umfasst ein automatisches Federsystem 10, welches mindestens ein Federelement 10.1 und eine auf das Federelement 10.1 einwirkende Federsystemverstelleinheit 10.2 zur automatischen Einstellung der Vorspannung des Federelements10.1 aufweist.

Die Schwingeinheit 100 umfasst das adaptive Dämpfersystem, welches hinsichtlich des Dämpfungsgrades eine automatische Einstellung der Dämpfkraft/Dämpferkraft ermöglicht, wie nachfolgend noch erläutert wird.

Weiterhin ist mindestens ein Bewegungssensor in der Art eines Höhensensors S2 sowie eine hiervon Dämpfersystem 30 und Federsystem 10 gemeinsam genutzte Steuereinheit 50 vorgesehen.

Das Federsystem 10 und das Dämpfersystem 30 sind in die Bewegungskinematik 20 des Fahrzeugsitzes 1 integriert.

Das Dämpfersystem 30 umfasst erfindungsgemäß ein Dämpferelement 30.1 und eine, auf das Dämpferelement 30.1 zur Veränderung des Dämpfungsgrades einwirkende, Dämpferverstelleinheit 30.2.

Das Dämpferelement 30.1 ist hier als Öldruckdämpfer und die darauf einwirkende Dämpferverstelleinheit 30.2 als Servomotor ausgebildet.

Als Federelement/e sind eine oder mehrere Spiralfedern 10.1 vorgesehen, auf welche die als Getriebemotor ausgebildete Federsystemverstelleinheit 10.2 zur Änderung der Vorspannung einwirkt.

In Figur 4, welche ein anderes Ausführungsbeispiel verdeutlicht, sind zwei Bewegungssensoren vorgesehen.

Ein Bewegungssensor, in der Art eines Beschleunigungssensors S2, erfasst die Beschleunigung des Sitzteiles 1.1, mithin des Fahrzeugsitzes 1, insgesamt in vertikaler Richtung z ohne Bezug auf die Position der Karosserie 2 und ein Höhensensor S2 die Position des Sitzteiles 1.1, mithin des Fahrzeugsitzes 1, insgesamt in vertikaler Richtung z bezüglich der Karosserie 2.

Die Verwendung eines Beschleunigungssensors, um die situative Ansteuerung = adaptive Dämpfung der Dämpferverstelleinheit 30.2 entsprechend der aus der Vertikalbeschleunigung (z-Richtung) errechneten kinetischen Energie Eₖᵢₙ des Fahrzeugsitzes 1 mittels Steuereinheit 50 vorzunehmen, hat gegenüber der Verwendung des Höhensensors S2 den Vorteil, dass die Beschleunigung des Fahrzeugsitzes 1 unabhängig von einer Relativbewegung des Fahrzeugsitzes 1 innerhalb des Bezugssystems zwischen Karosserie 2 und Fahrzeugsitz 1 ermittelt wird.

Das heißt, im Unterschied zu dem Höhensensor S2, der generell ebenfalls für die situative Ansteuerung = adaptive Dämpfung der Dämpferverstelleinheit 30.2 einsetzbar ist, ist die Eingangsgröße bei Verwendung des Beschleunigungssensors S1 die Beschleunigung des Fahrzeugsitzes 1 mit dem Vorteil, dass nicht die Wegänderung Δh_{z} des Fahrzeugsitzes 1 in Vertikalrichtung gegenüber der Karosserie 2 als Eingangsgröße für die Dämpferansteuerung der Dämpferverstelleinheit 30.2 innerhalb der Steuereinheit 50 benutzt wird, sondern die Beschleunigung des Fahrzeugsitzes 1 als Eingangsgröße für die Dämpferansteuerung der Dämpferverstelleinheit 30.2 innerhalb der Steuereinheit 50 dient, wodurch ein starkes Aufschwingen des Fahrzeugsitzes 1, beispielsweise hervorgerufen durch große Fahrbahnanregungen, vermieden wird.

Der Höhensensor S2 wird somit bevorzugt zur Einstellung der optimalen Mittenposition des Sitzteiles 1.1, das heißt der Schwingeinheit 100 des Fahrzeugsitzes 1 anhand des Ein-Ausfederweges Δz der Schwingeinheit 100 genutzt, um die personenabhängige veränderliche individuelle Position des Sitzteiles 1.1 vor Fahrtantritt zu erfassen und zumindest vor Fahrtantritt (gegebenenfalls auch bei einem zwischenzeitlichen Fahrzeugstillstand wiederholt) in einer optimalen Mittenposition einzustellen, während der Beschleunigungssensor S1 bevorzugt für die situative Ansteuerung = adaptive Dämpfung der Dämpferverstelleinheit 30.2 eingesetzt wird.

Die Daten werden mittels einer Datenleitung 51 an die Steuereinheit 50 übertragen.

Der Beschleunigungssensor S1, bevorzugt angebracht am beweglichen Teil der Schwingeinheit 100, dient der Erfassung der Vertikalbeschleunigung des Fahrzeugsitzes 1, um die situative Ansteuerung der Dämpferverstelleinheit 30.2 entsprechend der aus der Vertikalbeschleunigung errechneten kinetischen Energie Eₖᵢₙ des Fahrzeugsitzes 1 mittels Steuereinheit 50 vorzunehmen.

Der Höhensensor S2, bevorzugt angebracht am beweglichen Teil der Schwingeinheit 100, ist zur Erfassung der Ruheposition des Sitzteiles 1.1 installiert.

Die vom Gewicht der aufsitzenden Person abhängige Ruheposition des Sitzteiles 1.1 ist für die variable Einstellung der Vorspannung der Federelemente 10.1 maßgeblich. Damit erfolgt eine an das Gewicht der aufsitzenden Person angepasste Voreinstellung der Federvorspannung der Federelemente 10.1.

In Figur 5 ist nur ein Höhensensor S2 vorgesehen, der die Bewegung des Sitzteiles 1.1, das heißt den Einfederweg der Schwingeinheit 100 und damit des Sitzteiles 1.1 beziehungsweise des Fahrzeugsitzes 1 in vertikale Richtung z insgesamt erfasst.

Der Höhensensor erfasst, ausgehend von der optimalen Mittenposition des Sitzteiles 1.1 beziehungsweise der Schwingeinheit 100 anhand des Ein- Ausfederweges Δz der Schwingeinheit 100 die veränderliche Position des Sitzteiles 1.1.

Dementsprechend kann mittels des Höhensensors S2 sowohl die Ruheposition (Mittenposition des Sitzteiles 1.1) und eine Höhenänderung des Sitzteiles 1.1 ermittelt und in der Steuereinheit 50 verarbeitet werden.

Damit können sowohl das adaptive Dämpfungssystem als auch das automatische Federsystem 10 vorteilhaft mit nur einem Höhensensor S2, betrieben werden.

Mit anderen Worten, es ist mindestens ein Höhensensor S2 notwendig, um die Position des Sitzteiles 1.1 beziehungsweise des Fahrzeugsitzes 1 innerhalb des Kraftfahrzeuges gegenüber der Karosserie 2 zu bestimmen. Die Relativgeschwindigkeit des Sitzteiles 1.1 beziehungsweise des Fahrzeugsitzes 1 gegenüber der Karosserie 2 kann aus den ermittelten Daten des Höhensensors S2 berechnet werden.

Die Verwendung eines Beschleunigungssensors S1 in Kombination mit dem Höhensensor S2 stellt eine mögliche Ausführungsvariante dar. Möchte man einen Bewegungssensor einsparen, so ist es somit zumindest notwendig, den Höhensensor S2 zu verwenden.

Zur Ansteuerung und Energieversorgung von Federsystemverstelleinheit 10.2 und Dämpferverstelleinheit 30.2 sind diese durch eine Signalleitung 52 mit der Steuereinheit 50 verbunden.

Somit stellt die Erfindung ein adaptives Dämpfersystem bereit, um mittels einer Dämpferverstelleinheit 30.2 den Dämpfungsgrad des mindestens einen Dämpferelementes 30.1 in Abhängigkeit von der kinetischen Energie des Fahrzeugsitzes 1 adaptiv einstellen zu können.

Des Weiteren wird durch die Erfindung ein automatisches Federsystem 10 bereitgestellt, um mittels einer Federsystemverstelleinheit 10.2 die Vorspannung des mindestens einen Federelementes 10.1 in Abhängigkeit vom Gesamtgewicht (mit aufsitzender Person) des Fahrzeugsitzes 1 automatisch einzustellen.

Dadurch, dass der Dämpfungsgrad des Öldruckdämpfers an das jeweilige Schwingungsverhalten des Fahrzeugsitzes 1 anpassbar ist, kann mittels des automatisch einstellbaren Dämpfungsverhaltens des Öldruckdämpfers aufgrund der von der Steuereinheit 50 ausgewerteten Sensordaten die Schwingungsdämpfung des Fahrzeugsitzes 1 so erfolgen, dass ein aufgrund der Anregung durch Fahrbahnunebenheiten induziertes Nachschwingen des Sitzteiles 1.1 des Fahrzeugsitzes 1 auf vorteilhafte Weise wirksam verringert/vermieden sowie auf ein Minimum reduziert wird.

Dadurch ist es möglich, den Öldruckdämpfer im Unterschied zu der aus den Figuren 1 bis 3 bekannten Lösung situativ an das jeweilige, anregungsinduzierte Schwingungsverhalten des Fahrzeugsitzes 1, mithin des Sitzteiles 1.1, anzupassen. Durch die situative Anpassung des Öldruckdämpfers an das Schwingungsverhalten des Fahrzeugsitzes 1, mithin des Sitzteiles 1.1, wird in vorteilhafter Weise der Fahrkomfort erhöht.

Durch die Ermittlung der Ruheposition des Sitzteiles 1.1 kann die Steuereinheit 50 unter Berücksichtigung der Federkennlinie des Federelementes 10.1 mittels verbundenem Stellmotor 10.1 die Vorspannung des Federelementes 10.1 an das Gewicht der aufsitzenden Person anpassen.

Dabei ist vorgesehen, dass eine Veränderung der Federvorspannkraft dahingehend vorgenommen wird, dass eine Ausgangsposition, insbesondere eine optimale Mittellage, eingestellt wird, so dass der Einfederweg (mithin eine Vertikalverstellung der Scherenkinematik) Az↓, und der Ausfederweg Δz↑ gleich groß sind.

Die optimale Mittellage bewirkt eine optimale Positionierung des Sitzteiles 1.1, in vertikaler Richtung, in Bezug zur Karosserie 2, wodurch der größtmögliche Entkopplungskomfort erreicht wird.

In vorteilhafter Weise wird erreicht, dass von der Ausgangsposition ausgehend ein Anschlagen des Sitzteiles 1.1 an einem gedachten oberen Anschlagspunkt und einem gedachten unteren Anschlagspunkt ausgehend von der optimale Mittellage nicht in einer der Richtungen z↕ eher erreicht wird, so dass der Arbeitsbereich der Schwingeinheit 100 in beide Richtungen z↕ gleich groß und damit optimiert ist. Mit anderen Worten, zur optimalen Positionierung des Sitzteiles 1.1 in vertikaler Richtung z↕ wird das Sitzteil 1.1 in Bezug auf die Karosserie 2 in einer optimalen Mittellage mit maximaler Schwingamplitude in +/-z-Richtung ausgerichtet, wodurch der größtmögliche Entkopplungskomfort, das heißt die größtmögliche Bewegungsfreiheit des Sitzteiles 1.1 innerhalb des Systems im Bezugssystems Karosserie 2 und Fahrzeugsitz 1, erreicht wird, wobei ein größtmöglicher Hub einen maximalen Komfort ermöglicht.

Vorteilhaft kann mittels einer gemeinsamen Steuereinheit 50 zugleich die Ansteuerung der Dämpferverstelleinheit 30.2 als auch der Federsystemverstelleinheit 10.2 erfolgen.

Die Daten des Beschleunigungssensors S1 können sowohl für die Ansteuerung der Dämpferverstelleinheit 30.2 als auch der Federsystemverstelleinheit 10.2 genutzt werden.

Darüber hinaus kann die Berücksichtigung des tatsächlichen Gewichts des Fahrzeugsitzes 1 auch mittels des Beschleunigungssensors S1 erfolgen.

Damit kann das Gewicht bei der Berechnung der kinetischen Energie des Fahrzeugsitzes 1 zur Ansteuerung des Öldruckdämpfers Berücksichtigung finden.

Durch die Mehrfachdatenerfassung mittels nur eines Bewegungssensors wird die Erfindung wesentlich vereinfacht und kann somit vorteilhaft zuverlässiger und zugleich kostengünstiger realisiert werden.

Die zur Bereitstellung der erfindungsgemäßen Lösung erforderlichen wenigen Komponenten sind kostengünstig verfügbar beziehungsweise herstellbar. Die Installation der zusätzlichen Systemkomponenten ist vorteilhaft einfach, wobei vorhandene Fahrzeugsitze 1 prinzipiell geeignet sind, so dass keine grundlegende Neuentwicklung von Fahrzeugsitzen 1 erforderlich ist, um die Erfindung anwenden zu können. Abgesehen von Elektroenergie wird keine Fremdenergie, wie beispielsweise Druckluft, benötigt.

In Figur 6 ist ein Verfahrensschema zur Regelung des Schwingverhaltens des erfindungsgemäßen Fahrzeugsitzes 1 gezeigt.

Das erfindungsgemäße Verfahren sieht vor, dass im Ausgangszustand des Verfahrens eine die Vorspannung des mindestens einen Federelementes 10.1 der Vorspannung während der letzten Nutzung entspricht. Dementsprechend werden die zuletzt gegenüber einer Bezugshöhe vorliegende Höhenposition und die Einstellung der Vorspannung des Federelementes des Federsystems zunächst übernommen. Somit sind die Startbedingungen für das Verfahren definiert. Alternativ kann die Federvorspannung zum Start für einen optimierten Einstieg eingestellt sein oder über eine Fahrererkennung schon vor Einstieg für den jeweiligen wechselnden Fahrer optimal eingestellt sein.

In einem ersten Verfahrensschritt V1 erfolgt ein Initiierungsvorgang, der beispielsweise in einem Einschalten der Zündung eines Fahrzeuges besteht, welches den erfindungsgemäßen Fahrzeugsitz 1 aufweist, und anschließend erfolgt die Ermittlung der Höhenposition Δh_{z} des Sitzteiles 1.1 des Fahrzeugsitzes 1 gegenüber der Bezugshöhe in Abhängigkeit vom Gewicht der aufsitzenden Person.

Bei Abweichung der Höhe des Sitzteiles 1.1 gegenüber der festen Bezugshöhe, insbesondere von der bei der letzten Fahrt ermittelten Höhe gegenüber der festen Bezugshöhe, wird die Federvorspannung anhand einer Kennlinie in Abhängigkeit der neu ermittelten Höhenposition des Sitzteiles 1.1 des Fahrzeugsitzes 1 und damit auf das Gewicht der aufsitzenden Person automatisch eingestellt.

Während der Fahrt werden in einem dritten Verfahrensschritt V3 mittels des Höhensensors S2 oder des Beschleunigungssensors S1 kontinuierlich Daten bezüglich der vertikalen Bewegung des Sitzteiles 1.1 mithin des Fahrzeugsitzes 1 ermittelt.

Aus diesen Daten ermittelt die Steuereinheit 50 jeweils die kinetische Energie Eₖᵢₙ des Fahrzeugsitzes 1 aufgrund der Anregung infolge von Fahrbahnunebenheiten.

Anhand einer Dämpferkennlinie wird die Dämpferverstelleinheit 30.2 zur Regelung des Dämpferelementes in der Weise vorteilhaft so geregelt, dass die Dämpfkraft des Dämpferelementes an die kinetische Energie Eₖᵢₙ aufgrund der aktuellen Anregung durch die Fahrbahn situativ angepasst wird.

Damit erfolgt vorteilhaft die Dämpfung mit der gerade für bestmöglichen Fahrtkomfort erforderlichen Dämpfkraft, um ein Nachschwingen des Sitzteiles 1.1 des Fahrzeugsitzes 1 zu verhindern. Auf diese erfindungsgemäße Weise wird somit der Fahrkomfort für die auf dem Sitzteil 1.1 des Fahrzeugsitzes 1 aufsitzende Person erheblich verbessert.

Dabei wird gewährleistet, dass die Dämpfkraft aufgrund der anregungsinduzierten Schwingungen des Sitzes derart angepasst werden kann, dass soviel Kraft zur Dämpfung (Dämpfkraft) wie nötig (damit die Sitzfederung nicht durchschlägt) und so wenig Kraft zur Dämpfung (Dämpfkraft) wie möglich, aufgebracht wird.

Das hat einerseits den Vorteil, wenn nur so viel Kraft zur Dämpfung (Dämpfkraft) wie nötig aufgebracht wird, dass das Sitzteil 1.1 über die Schwingeinheit 100 nicht in die eine oder andere Richtung durchschlägt.

Das hat andererseits den Vorteil, wenn nur so wenig Kraft zur Dämpfung (Dämpfkraft) wie möglich aufgebracht wird, dass das Sitzteil 1.1 eine gute Entkopplung aufweist, wodurch eine möglichst geringe Beschleunigung des auf dem Sitzteil 1.1 aufsitzenden Passagiers bewirkt wird.

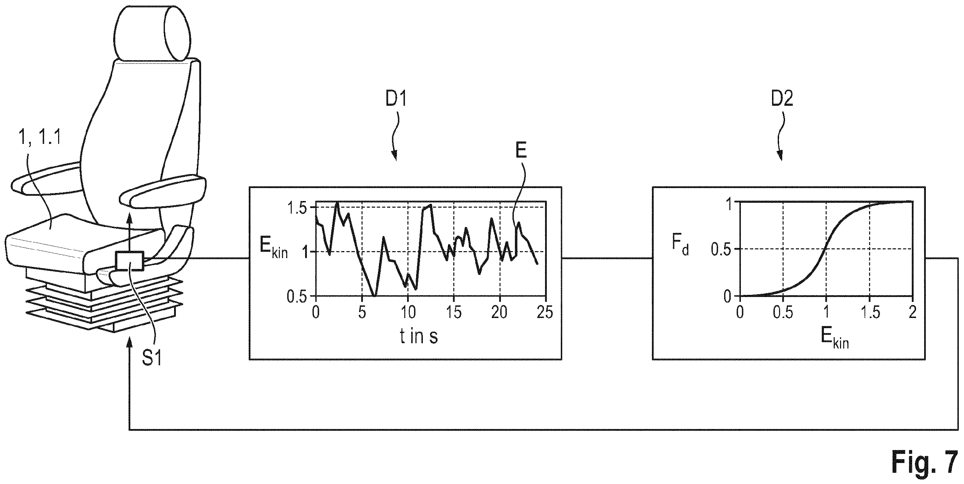

Die Figur 7 zeigt eine perspektivische Darstellung des Fahrzeugsitzes 1 in Verbindung mit einem Energie-Zeit-Diagramm D1 und einem Dämpferhärte-Energie-Diagramm D2.

Das Energie-Zeit-Diagramm D1 zeigt beispielhaft einen Verlauf der kinetischen Energie Eₖᵢₙ des Fahrzeugsitzes 1 während einer Zeitspanne von beispielhaften 24 sec.

Die kinetische Energie Eₖᵢₙ des Fahrzeugsitzes 1 wird aus den Daten der Bewegungssensoren, bevorzugt des Beschleunigungssensors S1 in vertikaler Richtung z bestimmt und in der Steuereinheit 50 verarbeitet.

Es wird deutlich, dass die kinetische Energie Eₖᵢₙ des Fahrzeugsitzes 1 eine stark schwankende Größe ist, die in vorteilhafter Weise nicht direkt zur Ansteuerung beziehungsweise Regelung der Dämpferhärte verwendet wird, da dadurch ein relativ unruhiges Dämpfersystem 30 die Folge wäre.

In vorteilhafter Weise wird die sich verändernde kinetische Energie ΔEₖᵢₙ des Fahrzeugsitzes 1 normiert, wie nachfolgend noch erläutert wird.

Das Dämpferhärte-Energie-Diagramm D2 zeigt die durch die Dämpferverstelleinheit 30.2 am Dämpferelement 30.1 einzustellende Dämpferhärte, die in Abhängigkeit von der mittels Steuereinheit 50 berechneten und anschließend normierten kinetischen Energie Eₖᵢₙ des Fahrzeugsitzes 1 vorgenommen wird.

Als Grundsatz gilt, dass je größer die von der Steuereinheit 50 berechnete und anschließend vorgegebene Dämpferhärte 0 bis 1 ist, umso energieabsorbierender wird das Dämpferelement 30.1 mittels der Dämpferverstelleinheit 30.2 eingestellt.

Figur 7 zeigt, dass die normierte Dämpferhärte ab einem Wert der kinetischen Energie Eₖᵢₙ des Fahrzeugsitzes 1 von circa 0,75 bis zu einem Wert der kinetischen Energie Eₖᵢₙ von circa 1,25 exponentiell zunimmt.

Es ist erfindungsgemäß vorgesehen, vergleiche Figur 7, dass bei ermittelter geringer kinetischer Energie Eₖᵢₙ des Fahrzeugsitzes 1 keine Dämpfung mittels des Dämpferelementes 30.1 erfolgt, da bereits die Eigendämpfung des vorgespannten Federelementes 10.1 ausreichend ist.

Anhand des Dämpferhärte-Energie-Diagramms D2 wird weiter verdeutlicht, wie die bevorzugte Einstellung der Dämpferhärte beziehungsweise der Dämpfungskraft F_{d} mittels der Dämpferverstelleinheit 30.2 vorgenommen wird.

Bei geringen anregungsinduzierten Schwingungen, das heißt Werten der kinetischen Energie Eₖᵢₙ des Fahrzeugsitzes 1 zwischen 0 und < 1,0, insbesondere bis zu einem Wert der kinetischen Energie Eₖᵢₙ < 0,5 des Fahrzeugsitzes 1, wird die Dämpfkraft oder Dämpferhärte unterproportional verstärkt, um insbesondere für einen Komfort, das heißt eine Entkopplung des Fahrzeugsitzes 1 von der Karosserie 2, zu sorgen.

Bei größeren anregungsinduzierten Schwingungen, das heißt Werten der kinetischen Energie Eₖᵢₙ des Fahrzeugsitzes 1 zwischen 1,0 und 1,5, insbesondere bis zu einem Wert der kinetischen Energie Eₖᵢₙ = 1,5 des Fahrzeugsitzes 1, wird die Dämpfkraft oder Dämpferhärte überproportional verstärkt, um insbesondere einen möglichen unerwünschten Diskomfort zu vermeiden, das heißt ein Durchschlagen des Fahrzeugsitzes 1 zu vermeiden.

Vorgesehen ist weiter, dass die Dämpfkraft oder Dämpferhärte, bei größeren anregungsinduzierten Schwingungen, das heißt bei einem Wert der kinetischen Energie Eₖᵢₙ> 1,5 des Fahrzeugsitzes 1, auf den Maximalwert gesetzt wird, wobei durch diese Maßnahme ebenfalls ein Durchschlagen des Fahrzeugsitzes 1 sicher vermieden wird.

### Bezugszeichenliste

- 1: Fahrzeugsitz
- 1.1: Sitzteil
- 2: Karosserie
- 3: Handrad für Federelementvorspannung
- 4: Handhebel für Dämpfungsgradverstellung
- 100: Schwingeinheit
- 110: Scherenkinematik
- 10: Federsystem
- 10.1: Federelement
- 10.2: Federsystemverstelleinheit, elektromechanisches Stellelement, Getriebemotor
- 20: Bewegungskinematik
- 30: Dämpfersystem
- 30.1: Dämpferelement
- 30.2: Dämpferverstelleinheit
- 50: Steuereinheit
- 51: Datenleitung
- 52: Signalleitung
- S1: Beschleunigungssensor (in vertikaler Richtung)
- S2: Höhensensor
- D1: Diagramm, kinetische Energie über der Zeit
- D2: Diagramm, Dämpferhärte über der kinetischen Energie
- Eₖᵢₙ: kinetische Energie
- F_{d}: Dämpfungskraft
- Δh_{z}: Wegänderung in Vertikalrichtung

## Patentansprüche

1. Fahrzeugsitz (1) mit einer zwischen einer Karosserie (2) und einem Sitzteil (1.1) des Fahrzeugsitzes (1) angeordneten Schwingeinheit (100), umfassend ein Federsystem (10) und ein verstellbares Dämpfersystem (30), die in eine Bewegungskinematik (20) integriert sind, wobei das verstellbare Dämpfersystem (30) als adaptives Dämpfersystem ausgebildet ist, das neben dem Federsystem (10) in die Bewegungskinematik (20) der Schwingeinheit (100 ) integriert ist, wobei das adaptive Dämpfersystem zudem mindestens einen Bewegungssensor und mindestens eine Steuereinheit (50) umfasst, der eine vertikale Bewegung des auf der Bewegungskinematik (20) angeordneten Sitzteiles (1.1) erfasst, um in Abhängigkeit eines erfassten Sensorsignals des mindestens einen Bewegungssensors eine Dämpfung der Schwingeinheit (100) und damit des Sitzteiles (1.1) durch adaptive Ansteuerung des Dämpfersystems (30) zu dämpfen, **dadurch gekennzeichnet, dass** das Federsystem (10) mindestens ein Federelement (10.1), eine Federsystemverstelleinheit (10.2) zur Einstellung einer Vorspannung des mindestens einen Federelements (10.1), einen Höhensensor (S2) zur Erfassung der Höhe des Sitzteiles (1.1) gegenüber einer festen Bezugshöhe, und eine Steuereinheit (50) umfasst, um eine Veränderung der Vorspannkraft des mindestens einen Federelementes (10.1) des Federsystems (10) in Abhängigkeit des erfassten Sensorsignals des Höhensensors (S2) durch automatische Ansteuerung der Federsystemverstelleinheit (10.2) zu bewirken.

2. Fahrzeugsitz (1) nach Anspruch 1, **dadurch gekennzeichnet, dass** das adaptive Dämpfersystem mindestens ein Dämpferelement (30.1) und eine automatische Dämpferverstelleinheit (30.2) umfasst, wobei die Dämpferverstelleinheit (30.2) dazu ausgebildet ist, durch adaptive Ansteuerung der Dämpferverstelleinheit (30.2) aufgrund eines Signals der Steuereinheit (50) den Dämpfungsgrad/Dämpferhärte des Dämpferelements (30.1) zu variieren, wobei adaptive Dämpfung der Dämpferverstelleinheit (30.2) entsprechend der aus der Vertikalbeschleunigung (z-Richtung) errechneten kinetischen Energie (Eₖᵢₙ) des Fahrzeugsitzes (1) mittels Steuereinheit 50 vorgenommen wird, die durch erfasste Sensorsignale eines Beschleunigungssensors (S1) ermittelt wird.

3. Fahrzeugsitz (1) nach Anspruch 1 oder 2, **dadurch gekennzeichnet, dass** die Antriebe der Dämpferverstelleinheit (30.2) und/oder der Federsystemverstelleinheit (10.2) als elektromechanische Stellelement/e ausgebildet sind.

4. Fahrzeugsitz (1) nach Anspruch 2, **dadurch gekennzeichnet, dass** das Dämpferelement (30.1) ein Öldruckdämpfer oder ein pneumatischer Dämpfer ist.

5. Fahrzeugsitz (1) nach Anspruch 1, **dadurch gekennzeichnet, dass** der Höhensensor (S2), der die Bewegung der Schwingeinheit (100) erfasst, an einem gegenüber einer Karosserie (2) beweglichen Teil der Schwingeinheit (100) angeordnet ist.

6. Fahrzeugsitz (1) nach den Ansprüchen 1 und 2, **dadurch gekennzeichnet, dass** der Höhensensor (S2) und der Beschleunigungssensor (S1) an dem gegenüber einer Karosserie (2) beweglichen Teil der Schwingeinheit (100) angeordnet sind, um die Bewegung der Schwingeinheit (100) zu erfassen.

7. Fahrzeugsitz (1) nach Anspruch 1, **dadurch gekennzeichnet, dass** die Bewegungskinematik (20) eine Scherenkinematik oder Parallelführung ist.

8. Verfahren zur Regelung des Schwingverhaltens eines in einem Fahrzeug angeordneten Fahrzeugsitzes (1) nach mindestens einem der Ansprüche 1 bis 7 nach einem Initiierungsvorgang einer Steuereinheit (50), insbesondere einem Einschalten der Zündung (V1) des Fahrzeuges und Aktivierung der Steuereinheit (50) mit folgenden Schritten,
• Ermitteln (V2) einer Änderung einer Höhenposition (Δh_{z}) der Schwingeinheit (100) anhand des Höhensensors (S2) in Abhängigkeit der Masse (m) einer auf dem Fahrzeugsitz (1) aufsitzenden Person - vor Fahrtbeginn - und
• Ändern der Federvorspannung des mindestens einen Federelementes (10.1) des Federsystems (10) in Abhängigkeit der Änderung einer Höhenposition (Δh_{z}) ausgehend von einem vorgebbaren Ausgangszustand der Federvorspannung oder der letzten eingestellten und registrierten Federvorspannung, und
• kontinuierliche Ermittlung (V3) der Änderung der Höhenposition (Δh_{z}) der Schwingeinheit (100) gegenüber der Karosserie (2) - während der Fahrt - mittels des Höhensensors (S2), und
• Berechnung einer Regelgröße (x) zur Anpassung der von dem Dämpferelement (30.1) des Dämpfersystems (30) ausgeübten Dämpfkraft durch Ansteuerung der Dämpferverstelleinheit (30.2) mittels der Steuereinheit (50),
**gekennzeichnet durch** die Schritte,
• Ermitteln (V2) der Änderung der Höhenposition (Δhz) der Schwingeinheit (100) anhand des Höhensensors (S2) in Abhängigkeit der Masse (m) einer auf dem Fahrzeugsitz (1) aufsitzenden Person, und
• Ändern der Federvorspannung des mindestens einen Federelementes (10.1) des Federsystems (10) in Abhängigkeit der Änderung einer Höhenposition (Δh_{z}) ausgehend von dem vorgebbaren Ausgangszustand der Federvorspannung oder der letzten eingestellten und registrierten Federvorspannung, bei einem nach Fahrt stattfindenden Fahrzeugstillstand, wiederholt wird.

9. Verfahren nach Anspruch 8, **dadurch gekennzeichnet, dass** mittels des Höhensensors (S2) die Änderung der Höhenposition (Δh_{z}) der Schwingeinheit (100) gegenüber der Karosserie (2) oder eine mittels des Beschleunigungssensors (S1) gemessene Beschleunigung der Schwingeinheit (100) in vertikaler Richtung (z) gegenüber der Karosserie (2) ermittelt wird, und
• die Höhenänderung ( Δz) oder die Beschleunigung mittels eines Hochpass-Integrators zu einer vertikalen Geschwindigkeit umgerechnet wird, und
• aus der vertikalen Geschwindigkeit (v) und der Masse (m), der auf dem Fahrzeugsitz (1) aufsitzenden Person, die Beschleunigung als Summe aller Kräfte die kinetische Energie des Fahrzeugsitzes (1), Eₖᵢₙ = ½ m*v² bestimmt wird, wobei
• die kinetische (Eₖᵢₙ) Energie des Fahrzeugsitzes (1) mittels vorgegebener geeigneter Zeitkonstanten im Sekunden-Bereich tiefpassgefiltert wird, wodurch
• die durch die integrierende Eigenschaft des Tiefpassfilters integrierte Größe der kinetischen Energie (Eₖᵢₙ) durch eine vorgegebene applizierte Hill-Funktion härter oder weicher auf Werte zwischen 0 als weichste Dämpfung und 1 als härteste Dämpfung normiert und derart geregelt wird, dass die Dämpfkraft des Dämpferelementes (30.1) an die kinetische Energie (Eₖᵢₙ) aufgrund aktueller Anregungen durch die Fahrbahn situativ angepasst wird.

10. Verfahren nach Anspruch 9, **dadurch gekennzeichnet, dass** die Masse (m), der auf dem Fahrzeugsitz (1) aufsitzenden Person,
• durch einen Beobachter oder ein neuronales Netz durch Auswertung der Beschleunigung m*Beschleunigung = Summe aller Kräfte, insbesondere einer Federkraft des Federelementes (10.1) des Federsystems (10) und einer Dämpferkraft des Dämpferelementes (30.1) des Dämpfersystems (30) als Summe der aufgebrachten Federkraft + Dämpferkraft geschätzt oder
• als Mittelwert der Massen, der auf dem Fahrzeugsitz (1) aufsitzenden Personen, angenommen wird.

## Claims

1. Vehicle seat (1) having an oscillation unit (100) arranged between a body (2) and a seat part (1.1) of the vehicle seat (1), comprising a spring system (10) and an adjustable damper system (30) which are integrated into a movement kinematics (20), the adjustable damper system (30) being designed as an adaptive damper system which is integrated into the movement kinematics (20) of the oscillation unit (100) in addition to the spring system (10), the adaptive damper system additionally comprising at least one movement sensor and at least one control unit (50) which detects a vertical movement of the seat part (1.1) arranged on the movement kinematics (20) in order to damp a damping of the oscillation unit (100) and thus of the seat part (1.1) by adaptive actuation of the damper system (30) depending on a detected sensor signal of the at least one movement sensor, **characterized in that** the spring system (10) comprises at least one spring element (10.1), a spring system adjustment unit (10.2) for adjusting a preloading of the at least one spring element (10.1), a height sensor (S2) for detecting the height of the seat part (1.1) relative to a fixed reference height, and a control unit (50) in order to bring about a change in the preloading force of the at least one spring element (10.1) of the spring system (10) depending on the detected sensor signal of the height sensor (S2) by automatic actuation of the spring system adjustment unit (10.2).

2. Vehicle seat (1) according to claim 1, **characterized in that** the adaptive damper system comprises at least one damper element (30.1) and an automatic damper adjustment unit (30.2), the damper adjustment unit (30.2) being designed to vary the damping degree/damper hardness of the damper element (30.1) by adaptive actuation of the damper adjustment unit (30.2) on the basis of a signal of the control unit (50), adaptive damping of the damper adjustment unit (30.2) which corresponds to the kinetic energy (Eₖᵢₙ) calculated from the vertical acceleration (z-direction) of the vehicle seat (1) being performed by means of control unit 50, which vertical acceleration is determined by detected sensor signals of an acceleration sensor (S1).

3. Vehicle seat (1) according to claim 1 or 2, **characterized in that** the drives of the damper adjustment unit (30.2) and/or the spring system adjustment unit (10.2) are designed as electromechanical adjusting elements.

4. Vehicle seat (1) according to claim 2, **characterized in that** the damper element (30.1) is an oil pressure damper or a pneumatic damper.

5. Vehicle seat (1) according to claim 1, **characterized in that** the height sensor (S2), which detects the movement of the oscillation unit (100), is arranged on a part of the oscillation unit (100) that is movable relative to a body (2).

6. Vehicle seat (1) according to claims 1 and 2, **characterized in that** the height sensor (S2) and the acceleration sensor (S1) are arranged on the part of the oscillation unit (100) which is movable relative to a body (2) in order to detect the movement of the oscillation unit (100).

7. Vehicle seat (1) according to claim 1, **characterized in that** the movement kinematics (20) is a scissor kinematics or parallel guide.

8. Method for controlling the oscillation behavior of a vehicle seat (1) arranged in a vehicle according to at least one of claims 1 to 7 in accordance with an initiation process of a control unit (50), in particular switching on the ignition (V1) of the vehicle and activating the control unit (50), comprising the following steps
• determining (V2) a change in a height position (Δh_{z}) of the oscillation unit (100) on the basis of the height sensor (S2) depending on the mass (m) of a person sitting on the vehicle seat (1), before the start of the journey, and
• changing the spring preload of the at least one spring element (10.1) of the spring system (10) depending on the change in a height position (Δh_{z}) starting from a predeterminable initial state of the spring preload or the most-recently adjusted and registered spring preload, and
• continuously determining (V3) the change in the height position (Δh_{z}) of the oscillation unit (100) relative to the body (2), during the journey, by means of the height sensor (S2), and,
• calculating a control variable (x) for adapting the damping force exerted by the damper element (30.1) of the damper system (30) by actuating the damper adjustment unit (30.2) by means of the control unit (50),
**characterized by** the steps of
• determining (V2) the change in the height position (Δhz) of the oscillation unit (100) on the basis of the height sensor (S2) depending on the mass (m) of a person sitting on the vehicle seat (1), and
• changing the spring preload of the at least one spring element (10.1) of the spring system (10) depending on the change in a height position (Δh_{z}), starting from the predeterminable initial state of the spring preload or the most-recently adjusted and registered spring preload, during a vehicle standstill taking place after the journey, is repeated.

9. Method according to claim 8, **characterized in that,** by means of the height sensor (S2), the change in the height position (Δh_{z}) of the oscillation unit (100) is determined relative to the body (2) or an acceleration of the oscillation unit (100) measured by means of the acceleration sensor (S1) in the vertical direction (z) relative to the body (2) is determined, and
• the height change (Δz) or the acceleration is converted to a vertical speed by means of a high-pass integrator, and
• the acceleration is determined, from the vertical speed (v) and the mass (m) of the person sitting on the vehicle seat (1), as the sum of all forces the kinetic energy of the vehicle seat (1), Eₖᵢₙ = ½ m*v²,
• the kinetic (Eₖᵢₙ) energy of the vehicle seat (1) being low-pass-filtered by means of predetermined suitable time constants in the seconds range, whereby
• the magnitude of kinetic energy integrated by the integrating property of the low-pass filter (Eₖᵢₙ) is standardized, harder or softer, by a predetermined applied Hill function to values between 0 as the softest damping and 1 as the hardest damping and is controlled in such a way that the damping force of the damper element (30.1) is situationally adapted to the kinetic energy (Eₖᵢₙ) on the basis of present stimuli owing to the roadway.

10. Method according to claim 9, **characterized in that** the mass (m) of the person sitting on the vehicle seat (1)
• is estimated by an observer or a neural network by evaluating the acceleration m*acceleration = sum of all forces, in particular a spring force of the spring element (10.1) of the spring system (10) and a damper force of the damper element (30.1) of the damper system (30) as the sum of the applied spring force + damper force or
• is assumed as the average value of the masses of the people sitting on the vehicle seat (1).

## Revendications

1. Siège de véhicule (1) comportant une unité oscillante (100) disposée entre une carrosserie (2) et une partie de siège (1.1) du siège de véhicule (1), comprenant un système de ressort (10) et un système amortisseur (30) réglable, lesquels sont intégrés dans une cinématique de mouvement (20), dans lequel le système amortisseur (30) réglable est réalisé comme un système amortisseur adaptatif qui est intégré à côté du système de ressort (10) dans la cinématique de mouvement (20) de l'unité oscillante (100), dans lequel le système amortisseur adaptatif comprend en outre au moins un capteur de mouvement et au moins une unité de commande (50), lequel capteur de mouvement détecte un mouvement vertical de la partie de siège (1.1) disposée sur la cinématique de mouvement (20) pour amortir, en fonction d'un signal de capteur détecté de l'au moins un capteur de mouvement, un amortissement de l'unité oscillante (100) et par conséquent de la partie de siège (1.1) par une commande adaptative du système amortisseur (30), **caractérisé en ce que** le système de ressort (10) comprend au moins un élément formant ressort (10.1), une unité de réglage de système de ressort (10.2) permettant de régler une précontrainte de l'au moins un élément formant ressort (10.1), un capteur de hauteur (S2) permettant de détecter la hauteur de la partie de siège (1.1) par rapport à une hauteur de référence fixe, et une unité de commande (50), afin d'entraîner, par une commande automatique de l'unité de réglage de système de ressort (10.2), une modification de la force de précontrainte de l'au moins un élément formant ressort (10.1) du système de ressort (10) en fonction du signal de capteur détecté du capteur de hauteur (S2).

2. Siège de véhicule (1) selon la revendication 1, **caractérisé en ce que** le système amortisseur adaptatif comprend au moins un élément amortisseur (30.1) et une unité de réglage d'amortisseur (30.2) automatique, dans lequel l'unité de réglage d'amortisseur (30.2) est configurée pour faire varier, par une commande adaptative de l'unité de réglage d'amortisseur (30.2) sur la base d'un signal de l'unité de commande (50), le degré d'amortissement/la force d'amortissement de l'élément amortisseur (30.1), dans lequel l'amortissement adaptatif de l'unité de réglage d'amortisseur (30.2) est effectué, au moyen de l'unité de commande 50, en fonction de l'énergie cinétique (Eₖᵢₙ) du siège de véhicule (1) calculée à partir de l'accélération verticale (direction z), lequel amortissement adaptatif est déterminé par des signaux de capteur détectés d'un capteur d'accélération (S1).

3. Siège de véhicule (1) selon la revendication 1 ou 2,
**caractérisé en ce que** les entraînements de l'unité de réglage d'amortisseur (30.2) et/ou de l'unité de réglage de système de ressort (10.2) sont réalisés comme des éléments de réglage électromécaniques.

4. Siège de véhicule (1) selon la revendication 2, **caractérisé en ce que** l'élément amortisseur (30.1) est un amortisseur à pression d'huile ou un amortisseur pneumatique.

5. Siège de véhicule (1) selon la revendication 1, **caractérisé en ce que** le capteur de hauteur (S2) qui détecte le mouvement de l'unité oscillante (100) est disposé sur une partie de l'unité oscillante (100), laquelle partie est mobile par rapport à une carrosserie (2).

6. Siège de véhicule (1) selon les revendications 1 et 2,
**caractérisé en ce que** le capteur de hauteur (S2) et le capteur d'accélération (S1) sont disposés sur la partie de l'unité oscillante (100) qui est mobile par rapport à une carrosserie (2) afin de détecter le mouvement de l'unité oscillante (100).

7. Siège de véhicule (1) selon la revendication 1, **caractérisé en ce que** la cinématique de mouvement (20) est une cinématique en ciseaux ou un guide parallèle.

8. Procédé permettant la régulation du comportement oscillant d'un siège de véhicule (1) disposé dans un véhicule selon au moins l'une des revendications 1 à 7 après un processus de déclenchement d'une unité de commande (50), en particulier un allumage du contact (V1) du véhicule et une activation de l'unité de commande (50), comportant les étapes suivantes
• détermination (V2), avant le début de la conduite, d'une modification d'une position en hauteur (Δh_{z}) de l'unité oscillante (100) à l'aide du capteur de hauteur (S2) en fonction de la masse (m) d'une personne assise sur le siège de véhicule (1) et
• modification de la précontrainte de ressort de l'au moins un élément formant ressort (10.1) du système de ressort (10) en fonction de la modification d'une position en hauteur (Δh_{z}) à partir d'un état initial pouvant être prédéfini de la précontrainte de ressort ou de la dernière précontrainte de ressort réglée et enregistrée, et
• détermination en continu (V3), pendant la conduite, de la modification de la position en hauteur (Δh_{z}) de l'unité oscillante (100) par rapport à la carrosserie (2) à l'aide du capteur de hauteur (S2), et
• calcul d'une grandeur de régulation (x) pour l'ajustement de la force d'amortissement exercée par l'élément amortisseur (30.1) du système amortisseur (30) par une commande de l'unité de réglage d'amortisseur (30.2) au moyen de l'unité de commande (50),
**caractérisé par** les étapes de
• détermination (V2) de la modification de la position en hauteur (Δhz) de l'unité oscillante (100) à l'aide du capteur de hauteur (S2) en fonction de la masse (m) d'une personne assise sur le siège de véhicule (1), et
• modification de la précontrainte de ressort de l'au moins un élément formant ressort (10.1) du système de ressort (10) en fonction de la modification d'une position en hauteur (Δh_{z}) à partir de l'état initial pouvant être prédéfini de la précontrainte de ressort ou de la dernière précontrainte de ressort réglée et enregistrée, lorsque le véhicule se trouve à l'arrêt après la conduite, est répétée.

9. Procédé selon la revendication 8, **caractérisé en ce que** le capteur de hauteur (S2) permet de déterminer la modification de la position en hauteur (Δh_{z}) de l'unité oscillante (100) par rapport à la carrosserie (2) ou une accélération, mesurée au moyen du capteur d'accélération (S1), de l'unité oscillante (100) dans la direction verticale (z) par rapport à la carrosserie (2), et
• la variation de hauteur (Δz) ou l'accélération est convertie en une vitesse verticale au moyen d'un intégrateur à filtre passe-haut, et
• l'énergie cinétique du siège de véhicule (1), Eₖᵢₙ = 1/2 m*v², est déterminée à partir de la vitesse verticale (v) et de la masse (m) de la personne assise sur le siège de véhicule (1), l'accélération étant la somme de toutes les forces, dans lequel
• l'énergie cinétique (Eₖᵢₙ) du siège de véhicule (1) est filtrée par filtre passe-bas à l'aide de constantes de temps, adaptées et prédéfinies, à la seconde près, moyennant quoi
• la grandeur de l'énergie cinétique (Eₖᵢₙ), laquelle grandeur est intégrée par la propriété intégratrice du filtre passe-bas, est normalisée de manière plus rigide ou plus douce par une fonction de Hill appliquée et prédéfinie à des valeurs comprises entre 0 comme amortissement le plus doux et 1 comme amortissement le plus rigide, et régulée de telle sorte que la force d'amortissement de l'élément amortisseur (30.1) est adaptée au cas par cas à l'énergie cinétique (Eₖᵢₙ) en fonction d'excitations actuelles de la chaussée.

10. Procédé selon la revendication 9, **caractérisé en ce que** la masse (m) de la personne assise sur le siège de véhicule (1)
• est estimée par un observateur ou un réseau neuronal en évaluant l'accélération m*accélération = somme de toutes les forces, en particulier d'une force de ressort de l'élément formant ressort (10.1) du système de ressort (10) et d'une force d'amortisseur de l'élément amortisseur (30.1) du système amortisseur (30), comme somme de la force de ressort + force d'amortisseur appliquées ou
• est adoptée comme valeur moyenne des masses des personnes assises sur le siège de véhicule (1).
